(19) **Europäisches Patentamt / European Patent Office / Office européen des brevets**

(11) **EP 2 328 312 B1**

(12) **EUROPEAN PATENT SPECIFICATION**

(45) Date of publication and mention
of the grant of the patent:
**20.03.2013 Bulletin 2013/12**

(51) Int Cl.:
**H04L 25/06** *(2006.01)*     **H04L 27/14** *(2006.01)*

(21) Application number: **10192183.1**

(22) Date of filing: **23.11.2010**

(54) **Method of estimating log-likelihood ratios and relative S-FSK receiver**

Verfahren zum Schätzen von Log-Likelihood-Verhältnissen und entsprechender S-FSK-Empfänger

Procédé d'estimation de rapports de vraisemblance logarithmique et récepteur S-FSK correspondant

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.11.2009 IT VA20090076**

(43) Date of publication of application:
**01.06.2011 Bulletin 2011/22**

(73) Proprietors:
• **STMicroelectronics Srl
20864 Agrate Brianza (IT)**
• **Dora S.p.A.
11100 Aosta (IT)**

(72) Inventors:
• **Veronesi, Daniele
11100, Aosta (IT)**
• **Guerrieri, Lorenzo
11100, Aosta (IT)**

(74) Representative: **Pellegri, Alberto et al
Società Italiana Brevetti S.p.A.
Via Carducci, 8
20123 Milano (IT)**

(56) References cited:
**WO-A1-2008/072604**

• ANIL MENGI ET AL: "Maximum-likelihood block decoding of noncoherent coded FSK for the CENELEC band", POWER LINE COMMUNICATIONS AND ITS APPLICATIONS, 2008. ISPLC 2008. IEEE INTERNATIONAL SYMPOSIUM ON, IEEE, PISCATAWAY, NJ, USA, 2 April 2008 (2008-04-02), pages 117-122, XP031247880, ISBN: 978-1-4244-1975-3

• SCHAUB T: "SPREAD FREQUENCY SHIFT KEYING", IEEE TRANSACTIONS ON COMMUNICATIONS, IEEE SERVICE CENTER, PISCATAWAY, NJ, US LNKD- DOI: 10.1109/TCOMM.1994.580214, vol. 42, no. 2/03/04, 1 February 1994 (1994-02-01), pages 1056-1064, XP000447354, ISSN: 0090-6778
• KOKKINOS E A M ET AL: "Narrowband incoherent threshold detection in non-additive Markov noise", SIGNAL PROCESSING, ELSEVIER SCIENCE PUBLISHERS B.V. AMSTERDAM, NL LNKD- DOI: 10.1016/S0165-1684(98)00163-7, vol. 72, no. 1, 4 January 1999 (1999-01-04), pages 39-45, XP004151092, ISSN: 0165-1684
• PARK B U ET AL: "Local likelihood estimation of truncated regression and its partial derivatives: Theory and application", JOURNAL OF ECONOMETRICS, ELSEVIER SCIENCE, AMSTERDAM, NL LNKD- DOI: 10.1016/J.JECONOM.2008.08.007, vol. 146, no. 1, 1 September 2008 (2008-09-01), pages 185-198, XP025467060, ISSN: 0304-4076 [retrieved on 2008-08-26]
• ILAN SHARFER ET AL: "A Maximum Likelihood Digital Receiver Using Coordinate Ascent and the Discrete Wavelet Transform", IEEE TRANSACTIONS ON SIGNAL PROCESSING, IEEE SERVICE CENTER, NEW YORK, NY, US, vol. 47, no. 3, 1 March 1999 (1999-03-01), XP011058488, ISSN: 1053-587X

**Description**

TECHNICAL FIELD

This invention relates to digital communications and more particularly to a method of estimating log-likelihood ratios and a receiver for Spread Frequency Shift Keying modulation.

BACKGROUND

Spread Frequency Shift Keying (S-FSK) is a modulation and demodulation technique that combines some of the advantages of a classic spread spectrum system (for example, immunity against narrowband interferers) with the advantages of a classic FSK system (low-complexity).

In order to better understand the addressed technical problem, a brief review of the S-FSK modulation is reported.

An S-FSK transmitter consists of a binary FSK transmitter in which the frequency deviation $f_d$ is large enough to generate a spectrum with two separate lobes. For this reason, the concept of dual channel is introduced: channel 0 refers to the signal placed around a frequency $f_o$ and channel 1 refers to the signal placed around a frequency $f_1$ , with $f_d = (f_1, -f_o)/2$. The symbols to be transmitted are generated with a rate $1/T$, where T is the symbol period, and belong to the alphabet {-1,+1}. *Let $d_k$ be the symbol to be transmitted at the time instant kT and let $x_+$ and $x_-$ be the sets of indices where these symbols assume positive and negative values, respectively (i.e. $X_+ = \{ k : d_k = +1 \}$ and $X_- = \{ k : d_k = -1 \}$).* The transmitted signal is

$$s(t) = \begin{cases} A\sin(2\pi f_0 t) & if\ \lfloor t/T \rfloor \in \chi_- \\ A\sin(2\pi f_1 t) & if\ \lfloor t/T \rfloor \in \chi_+ \end{cases} \qquad (1)$$

where A is a real constant and $\lfloor a \rfloor$ is the integer part of *a* .

A frequency selective channel with an additive non-white Gaussian noise is considered; however, the channel gain $G_i$ and the noise power spectral density $N_i$ are assumed to be flat around the frequency $f_i$ . Therefore, at the receiver input, the signal-to-noise ratio (SNR) for the channel i is:

$$\Gamma_i = \frac{A^2 G_i^2/2}{N_i/T}, \quad with\ i \in \{0,1\}. \qquad (2)$$

The SNRs defined in (2) completely characterize the quality of the received signal. Moreover, another characterization of the quality of the received S-FSK signal may be made through the unbalancing factor x and the average signal-to-noise ratio r. This last term is defined accordingly to [1] as the ratio of the signal energy and the average noise power densities. These parameters are related to (2) as follows:

$$\Gamma = 2 \cdot \frac{\Gamma_0 \cdot \Gamma_1}{\Gamma_0 + \Gamma_1} \quad and \quad x = \frac{\Gamma_1}{\Gamma_0}. \qquad (3)$$

Let us suppose that correct frame synchronization has been established with any technique and that it is necessary to discriminate at the receiver side whether a +1 or a -1 has been transmitted.

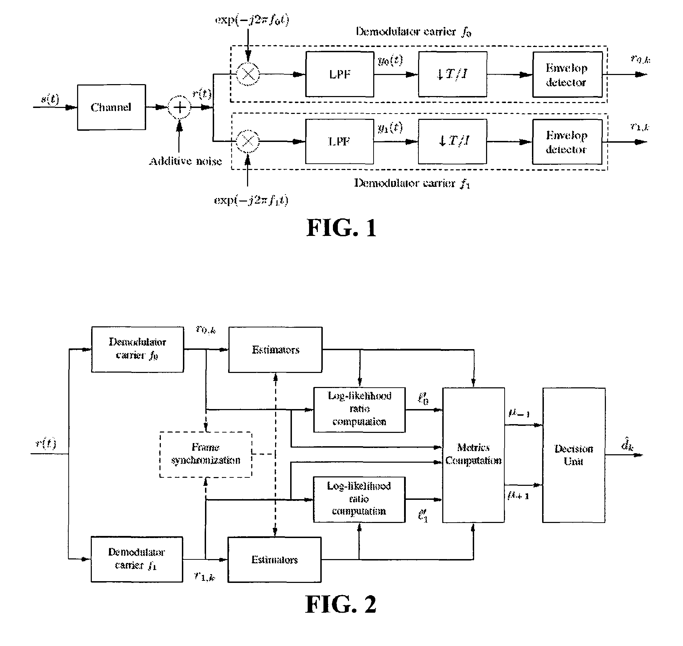

At the receiver side, the signal is processed along two different paths depicted in FIG. 1: on the first path, at the time t a multiplication by the complex exponential $\exp(-j2\pi f_0 t)$ is performed (corresponding to a frequency shift of $f_o$ Hz in the frequency domain); while, on the second path, a multiplication by the complex exponential $\exp(-j2\pi f_1 t)$ is performed. Successively, on each path the signal is filtered with a low-pass filter with cut-off frequency *l/T/2* , where l is the oversampling factor.

Hereinafter, without loosing generality, the low-pass filter LPF is assumed to be ideal.

The filter output $y_i$ *(t),* with $i \in \{0,1\}$, is sampled with a rate *l/T* and fed into an envelop detector, which is implemented with a weighed sum.

Let $\{\omega_n\}$ be the normalized weight coefficients ($\sum_{n=0}^{I-1} \omega_n = 1$) with $E_\omega = \sum_{n=0}^{I-1} |\omega_n|^2$. The signal r fed into a receiver may be modeled as follows:

$$r_{0,k} = \begin{cases} |w_{0,k}| & \text{if } k \in \chi_+ \\ |w_{0,k} + A/\sqrt{2} \cdot G_0| & \text{if } k \in \chi_- \end{cases} \qquad (4)$$

$$r_{1,k} = \begin{cases} |w_{1,k}| & \text{if } k \in \chi_- \\ |w_{1,k} + A/\sqrt{2} \cdot G_1| & \text{if } k \in \chi_+ \end{cases} \qquad (5)$$

where $w_{i,k}$ is an additive circularly Gaussian noise with zero mean and variance $\sigma_i^2 = E_\omega N_i I/T$, with $i \in \{0,1\}$.

In the following analysis, all the detailed receivers have the same structure. Let $p_i$ denote the value assumed by the *signal* $r_{i,k}$. The receiver elaborates $p_0$ and $p_1$, in order to detect which symbol has been transmitted. This operation is performed in two steps. In the first step, two decision values $\mu_{+1}(P_0, P_1)$ and $\mu_{-1}(P_0, P_1)$ are computed. Successively, accordingly to the higher decision value, the detected symbol $\hat{d}_k$ is:

$$\hat{d}_k = \begin{cases} +1 & \text{if } \mu_{+1}(\rho_0, \rho_1) > \mu_{-1}(\rho_0, \rho_1) \\ -1 & \text{elsewhere} \end{cases} \qquad (6)$$

S-FSK receivers are based on equation (6), but they differ from each other in the way the decision values are computed. Generally, the decision values $\mu_{+1}(P_0, P_1)$ and $\mu_{-1}(P_0, P_1)$ are computed given the knowledge of the channel and the noise parameters, namely the channel gains $G_i$ and the noise variances $\sigma_i^2$.

Assuming to have knowledge of the first $L_{TS}$ symbols at the transmitter and at the receiver sides, which is typical in S-FSK systems, the channel and noise parameters may be estimated using the signals (4) and (5) as follows:

$$\tilde{\sigma}_0^2 = \frac{1}{|\chi_+|} \sum_{k \in \chi_+} r_0(k)^2 \quad and \quad \tilde{\sigma}_1^2 = \frac{1}{|\chi_-|} \sum_{k \in \chi_-} r_1(k)^2 \qquad (7)$$

$$\tilde{G}_0^2 = \left( -\tilde{\sigma}_0^2 + \frac{1}{|\chi_-|} \sum_{k \in \chi_-} r_0(k)^2 \right) \cdot 2/A^2 \qquad (8)$$

$$\tilde{G}_1^2 = \left( -\tilde{\sigma}_1^2 + \frac{1}{|\chi_+|} \sum_{k \in \chi_+} r_1(k)^2 \right) \cdot 2/A^2 \qquad (9)$$

wherein $X_+$ and $X_-$ contain indices related to the first $L_{TS}$ symbols only, $|X|$ is the cardinality of the set X and $\tilde{\varphi}$ is the estimation of the parameter $\varphi$.

Once the noise variances and the channel gains are estimated, the SNRs defined in (2) or (3) are easily obtained. Furthermore, a reference value is introduced for each channel:

$$T_i^{\bullet} = \sqrt{\left(A\widetilde{G}_i/\sqrt{2}\right)^2 \Big/ 4 + \widetilde{\sigma}_i^2}$$

This reference value is employed in the decision process.

Conventional FSK detector

In order to give a comparison performance reference, a conventional FSK detector is detailed [2]: the computation of the two decision values is

$$\mu_{+1}(\rho_0, \rho_1) = \rho_1 \quad and \quad \mu_{-1}(\rho_0, \rho_1) = \rho_0 \qquad (10)$$

while the decision rule is expressed by (6). Hereafter, this receiver is denoted with the label *FSK.*

**S-FSK receivers proposed in the literature**

Let $I_0$ (.) be the modified Bessel function of the first kind of order 0. As given in [1], when the transmitted symbol $d_k = -1$, the amplitude probability density function $h_{i-}(p_i)$ of the signal $r_{i,k}$ with $i \in \{0,1\}$ is:

$$h_{0|-}(\rho_0) = \frac{2\rho_0}{\sigma_0^2} I_0\left(\frac{\rho_0 A G_0 \sqrt{2}}{\sigma_0^2}\right) \exp\left(-\frac{\rho_0^2 + (AG_0)^2/2}{\sigma_0^2}\right) \qquad (11)$$

$$h_{1|-}(\rho_1) = \frac{2\rho_1}{\sigma_1^2} \exp\left(-\frac{\rho_1^2}{\sigma_1^2}\right) \qquad (12)$$

being $h_{0|-}$ (.) and $h_{1|-}$ (.) the amplitude probability density function of the envelop detector output on channels 0 and 1, respectively, when the symbol - 1 has been transmitted.

On the other hand, when $d_k = +1$, the amplitude probability density function $h_{i|+}(p_i)$ of the signal $r_{i,k}$ with $i \in \{0,1\}$ is:

$$h_{0|+}(\rho_0) = \frac{2\rho_0}{\sigma_0^2} \exp\left(-\frac{\rho_0^2}{\sigma_0^2}\right) \qquad (13)$$

$$h_{1|+}(\rho_1) = \frac{2\rho_1}{\sigma_1^2} I_0\left(\frac{\rho_1 A G_1 \sqrt{2}}{\sigma_1^2}\right) \exp\left(-\frac{\rho_1^2 + (AG_1)^2/2}{\sigma_1^2}\right) \qquad (14)$$

being $h_0/+$ (.) and $h_1/+$ (.) the amplitude probability density function of the envelop detector output on channels 0 and 1, respectively, when the symbol +1 has been transmitted. Note that $h_{i,+}(p_i) = 0$ when $p_i < 0$. Assuming the symbols {-1,+1} to be transmitted with the same probability, the maximum likelihood decision turns out to be the optimum decision rule. In particular, the decision rule (6) uses the following decision values:

$$\mu_{+1}(\rho_0, \rho_1) = h_{0|+}(\rho_0) \cdot h_{1|+}(\rho_1)$$
$$\mu_{-1}(\rho_0, \rho_1) = h_{0|-}(\rho_0) \cdot h_{1|-}(\rho_1) \qquad (15)$$

Hereafter, this ideal receiver is denoted with the label *Ideal.*

To practically implement the ideal receiver, the estimated channel and noise parameters must be used in the formulae from (11) to (15).

However, formulae from (11) to (15) are relatively complex and do not allow a direct practical implementation of the ideal decision rule. In order to obviate to this limitation, in [1] two suboptimal implementations are proposed.

**First prior suboptimal solution**

Let $r_{i,.k}$ be quantized into the N intervals: $h_{i,1}, h_{i,2}, ..., l_{i,N}$ and let $p_i$ fall into the intervals $I_{i,}j_{i}$ , with $i \in \{0,1\}$. The decision is taken according to (6) on the following decision values:

$$\mu_{+1}(\rho_0,\rho_1) = v_{+1}(\rho_0) + v_{+1}(\rho_1)$$
$$\mu_{-1}(\rho_0,\rho_1) = v_{-1}(\rho_0) + v_{-1}(\rho_1) \qquad (16)$$

where

$$v_{\pm 1}(\rho_i) = \log \int_{I_{i,J_i}} h_{i|\pm}(\rho)d\rho \ . \qquad (17)$$

The values $v_{\alpha}(p_i)$ , with $i \in \{0,1\}$ and $\alpha \in \{-1,+1\}$ , are computed once the channel and the noise parameters are known. The practical implementation of (17) is, however, onerous. With a loss in performance, these decision values may be stored into a look-up table for a discrete set of channel parameters. Hereafter, this receiver is denoted with the label *Real.1.*

However, if the unbalancing factor x and the average signal-to-noise ratio $\Gamma$ vary over a large range of values, a quite substantial amount of memory is needed to guarantee a negligible loss in performance compared to (17).

**Second prior suboptimal solution**

Due to the memory drawback of the *Real.1* solution, in [1] a second suboptimal receiver is detailed. The detection rule is still given in (6), while the decision values are computed as follows:

A) if $\tilde{x}>+\tau^*$

$$\mu_{+1}(\rho_0,\rho_1) = \rho_1 \quad and \quad \mu_{-1}(\rho_0,\rho_1) = T_1^* \qquad (18)$$

B) if $\tilde{x} <-\tau^*$

$$\mu_{+1}(\rho_0,\rho_1) = T_0^* \quad and \quad \mu_{-1}(\rho_0,\rho_1) = \rho_0 \qquad (19)$$

C) otherwise

$$\mu_{+1}(\rho_0,\rho_1) = \frac{\rho_1}{\tilde{G}_1} \quad and \quad \mu_{-1}(\rho_0,\rho_1) = \frac{\rho_0}{\tilde{G}_0} \qquad (20)$$

where $\tau^* = 4.77$ dB. Hereafter, this real receiver is denoted with the label *Real.2.* In the cases A) and B) a conventional amplitude shift keying (ASK) receiver is realized [2, 3].

Unfortunately, the performance of the second sub-optimal solution is not satisfactory, in particular for values of the unbalancing factor x in the range [-10,10] dB.

The article by Anil Mengi and A.J. Vinck "Maximum-likelihood block decoding of noncoherent coded FSK for the CENELEC band", Power Line Communications and its Applications, 2008, ISPLC 2008, IEEE International Symposium on, IEEE, Piscataway, NJ, USA, 2 April 2008, pages 117-122, XP031247880, discloses a maximum-likelihood receiver for non-coherent 2-FSK modulation. A suboptimum decoding algorithm using a steepest-descent approximation of the decoding metric is proposed.

SUMMARY

A novel method of estimating the logarithmic likelihood ratio from a received S-FSK modulated signal, with a relatively small number of calculations, has been found.

According to the novel method, channel and noise parameters, associated to the transmitted value -1 and the transmitted value +1, are estimated for the first stream and for the second stream of samples obtained from the received S-FSK modulated signal. Then current signal-to-noise ratios for the current samples of the first stream and of the second stream of samples are estimated and compared with the values of a discrete ordered set of values, identifying the respective pairs of consecutive values of the ordered set between which the current signal-to-noise ratios are comprised. Pre-computed coefficients related to the values of the natural logarithm of the modified Bessel function of the first kind of order zero in correspondence of values belonging to the discrete ordered set of values are made available in a look-up table. The log-likelihood ratios for the first stream and for the second stream are estimated using respective polynomial approximating functions defined on the current signal-to-noise ratio and on the coefficients stored in the look-up table corresponding to the pairs of consecutive values.

According to an embodiment, the approximating functions are linear.

The novel method of estimating log-likelihood ratios may be used in a method of discriminating binary values in a received S-FSK modulated signal *(s(t))*

All the methods herein disclosed may be implemented at least partially via software or in a hardware receiver of S-FSK modulated signals.

The invention is defined in the annexed claims.

BRIEF DESCRIPTION OF THE DRAWINGS

**Figure 1** is a block diagram of a classic S-FSK demodulator.

**Figure 2** is a high-level diagram of the circuit blocks of a novel S-FSK receiver with a circuit for estimating the log-likelihood ratios.

**Figure 3** compares the BER vs. $\Gamma$ with x = 0 dB for various receivers.

**Figure 4** compares the BER vs. $\Gamma$ with x = -5 dB for various receivers.

**Figure 5** compares the BER vs. $\Gamma$ with x = -10 dB for various receivers.

**Figure 6** is a graph representation of the required $\Gamma$ to achieve the target BER= 10-' vs. x dB, for different receivers.

DESCRIPTION OF EXEMPLARY EMBODIMENTS

In order to describe the proposed receiver, the log-likelihood ratio $\ell_i\,(\rho_i)$ of the signal $r_{i,k}$ fed into the receiver is introduced:

$$\ell_i(\rho_i) = \log\left(h_{i|+1}(\rho_i) \Big/ h_{i|-1}(\rho_i)\right) \quad with \quad i \in \{0,1\}. \qquad (21)$$

Using the distributions (11)-(14), (21) may be simplified into the following equation:

$$\ell_i(\rho_i) = (2i-1)\left\{\log\left[I_0\left(\frac{\rho_i A G_i}{\sigma_i^2/\sqrt{2}}\right)\right] - \frac{A^2 G_i^2}{2\sigma_i^2}\right\}. \qquad (22)$$

Due to the presence of a logarithm and a Bessel function, (22) is very complex to be implemented.

A very simple way of estimating log-likelihood ratios for a first stream $(r_{o,k})$ and a second stream $(r_1,k)$ of samples of a received S-FSK signal $(_s(t))$ demodulated using a first carrier $(f_o)$ and a second carrier $(f_1)$, has been found.

According to an embodiment of the novel method, pairs of amplitude probability distribution functions, associated to the transmitted value -1 and the transmitted value +1, of samples obtained from the received S-FSK modulated signal of the first stream and of the second stream are calculated. As already explained, the channel and noise parameters used to calculate the amplitude probability distributions are estimated by transmitting a preestablished sequence of values +1 and -1 and by using equations (7) to (9).

According to an embodiment of the method of this invention, the log-likelihood ratios for the first stream and for the second stream are estimated using approximating functions defined on the current signal-to-noise ratios. Such approximating functions may be, for example, a polynomial obtained by truncating a Taylor's series expansion of the exact analytical formula of the log-likelihood ratio.

Another method of estimating the log-likelihood ratio is proposed hereinafter. Let g(.) be a piecewise linear approximation of the composed function $\log I_0(.)$ defined as:

$$g(a) = K_{e,1} + K_{e,2} \cdot a \qquad (23)$$

The approximation is defined over M intervals $L_1, L_2, \ldots, L_e, \ldots, L_M$ and the affinity coefficients $K_{e,1}$ and $K_{e,2}$ are constants over the interval $L_e$. A suitable choice is $e = \lfloor \log_2(a) \rfloor^+ \ \forall \ a \in [0,+\infty)$, wherein $\lfloor \varphi \rfloor^+$ denotes the nearest non negative integer of $\varphi$ and $K_{e,1}$ and $K_{e,2}$ are calculated by imposing g(.) to be equal to $\log[I_0(.)]$, on the boundary of each interval that defines the piecewise approximation:

$$g(a) = \log[I_0(a)] \quad with \quad a = 0, 2^1, 2^2, \ldots \qquad (24)$$

The skilled reader will appreciate that other definitions of $K_{e,1}$ and $K_{e,2}$ are possible, depending only on the values of $a$ for which they are off-line calculated. Only for sake of example the values of $a$, for which the function $g(a) = \log[I_0 (a)]$ is calculated, are 0 and an integer power of two, though the skilled reader will be capable of determining a different set of values for $a$ according to user needs. Therefore, in no way the illustrated choice can be considered a limitation of the present invention.

It is worth noticing that the coefficients $\{K_{e,1}\}$ and $\{K_{e,2}\}$ do not depend on the channel parameters, and for this reason it is possible to compute them off-line. Moreover, to fulfill particular needs, the memorization format of said coefficients could be adjusted, i.e. other coefficients related to $\{K_{e,1}\}$ and $\{K_{e,2}\}$ by a bijective correspondence, can be saved. For instance, to reduce the dynamic to the interval [-1+1], the coefficients $\{K_{e,1}\}$ and $\{K_{e,2}\}$ could be normalized by the maximum of the absolute value of them.

The skilled reader will also appreciate that variations of the function to be approximated can be envisaged without limiting the scope of the present invention. For example, to reduce the amplitude of the stored coefficients, the function to be approximated could be $\log[I_0 (a)]/2$.

Let us introduce a current signal-to-noise ratio $a_i = \rho_i A G_i \sqrt{2}/\sigma_i^2$ and an index of interval $e_i$ (a suitable choice may be $e_i = [\log_2 (a_i)]^+$), with $i \in \{0,1\}$. Using (23) in (22), an approximated estimation of the log-likelihood ratio $\ell_i(\rho_i)$ is obtained with the following equation:

$$\ell_i^{'}(\rho_i) = (2i-1)\left[ g(a_i) - \frac{A^2 G_i^2}{2\sigma_i^2} \right] \qquad (25)$$

In [1] it has been shown that with the increasing of the absolute value of the unbalancing factor, the improvement of the *Ideal* decision on the ASK decision (on the best channel) decreases. With the increasing of the unbalancing factor, the SNR on the best channel increases. For these reasons, at higher SNR values the *Ideal* decision may be substituted with the ASK decision. Hence, the introduced piecewise linear approximation (which is quite similar to the ideal solution) has to be valid over a limited range of SNRs. As a consequence, the memory required to store the coefficients $\{K_{e',}\}$ may be limited by fixing the maximum value of the interval index e to a suitable value $\Omega$. The proposed receiver decides accordingly to (6) on the following metrics:

A) if $e_0 \leq \Omega$, and $e_1 \leq \Omega$

$$\mu_{+1}(\rho_0,\rho_1) = \ell_1^{'}(\rho_1) \quad and \quad \mu_{-1}(\rho_0,\rho_1) = -\ell_0^{'}(\rho_0) \qquad (26)$$

B) if $e_o \ \Omega$ and $e_o \ e_1$ same as (19)

C) if $e_1 \ \Omega$ and $e_1 \ e_o$ , same as (18)

D) if $e_1 > \Omega$ and $e_1 = e_o$

$$\mu_{+1}(\rho_0,\rho_1) = \rho_1 - T_1^{\bullet} \quad and \quad \mu_{-1}(\rho_0,\rho_1) = \rho_0 - T_0^{\bullet} \qquad (27)$$

Simulation results have demonstrated that a good tradeoff between performance and complexity is obtained with $\Omega = 8$. From here on, this receiver is referred with the label *Real.3*.

FIG. 2 depicts a block diagram of a S-FSK receiver. The received signal *r(t)* is demodulated according to S-FSK demodulation about a frequency $f_o$ and a frequency $f_1$, generating two streams of samples $r_{o,k}$ and $r_{1,k}$. The receiver includes a classic circuit for synchronizing the sampling instants of the received signal (FRAME SYNCHRONIZATION) with the incoming frame of digital data. Here we suppose an ideal synchronization.

Two identical circuit blocks ESTIMATORS estimate channel and noise parameters from the incoming stream of sampled data and the respective reference values. Two identical circuit blocks LOG-LIKELIHOOD RATIO COMPUTATION generate respective estimations of the log-likelihood ratio in function of the respective estimated parameters and of the respective sensed amplitude of the streams of samples, according to the novel method.

A circuit METRICS COMPUTATION calculates the decision parameters $\mu_{-1}$ , $\mu_{+1}$ and a decision circuit DECISION UNIT generates the received symbol $d_k$ , preferably according to the novel method of discriminating binary values.

According to another embodiment, the received stream of samples of data are processed by a processor or a computer using a software that causes the processor or computer to carry out the disclosed method of estimating log-likelihood ratios, and a method of discriminating binary values in a received S-FSK signal. Preferably, the method of discriminating binary values implemented by the processor or computer executing the software, is the method herein disclosed.

To better appreciate the improvements of the invention, we compare the proposed solution with the prior art. In a real implementation of the *Real.1* solution, the decision values (17) are stored in two tables which need an amount of memory that is proportional to the number of quantization intervals N . Although a metric table is valid only for a fixed pair of x and $\Gamma_i$ in [1] it is shown that, for a given unbalancing factor x , the *Real.1* receiver may operate with a minimum degradation with only three pairs of metric tables and with $N \geq 8$ . For these reasons, in this analysis, the number of intervals is N =12 , and the stored decision values are obtained for all the couples $(\Gamma_i, x)$ , where $\Gamma_i \in \{0,3,6\}$ dB, x $\in \{0,1,2,...,9,10\}$ dB and $i \in \{0,1\}$. Note that for the negative unbalancing factors, the decision values are swapped. Successively, once the channel parameters are estimated, the *Real.1* receiver uses the stored decision values computed with the closest values of $(\Gamma_i, x)$.

In order to quantify the complexity of the detailed solutions, we evaluate its cost in terms of number of elementary operations (as sum). Given one interval partitioned into N sub-intervals and a generic value a , to detect which sub-interval contains a has a cost of N operations. Given two $L$ samples, the comparison of them or the product of them cost one operation each. Let $a$ be a generic value expressed with a bit-true representation; the computation of $\lfloor log_2(a) \rfloor^+$ is easily obtainable and it costs one operation only.

Using these rules, Tab.1 reports the memory occupation and the number of elementary operations required to detect one symbol.

**Table 1:** Complexity comparison among the different receivers.

|  | Memory [byte] | Operations [number] |
|---|---|---|
| Real.1 | 720 | 26 |
| Real.2 | 5 | 4 |
| Real.3 | 20 | 11 |

From this analysis, it is clear that the solution *Real.1* requires an amount of memory that is quite substantial compared to the other solutions. Since also the number of operations required by solution *Rear.1* is the highest, this solution turns out to be the more expensive. Furthermore, as it will be shown, the costs in terms of memory and complexity are not rewarded with a gain in performance. Focusing our analysis on the comparison between the solutions *Real.2* and *Real.3,* it turns out that *Real.3* solution is slightly more complex than *Real.2.* However, as it will be shown in the next section, in this case the costs in terms of memory and complexity are rewarded with a gain in performance.

The performance of the novel receiver is compared through numerical simulations with that of prior receivers.

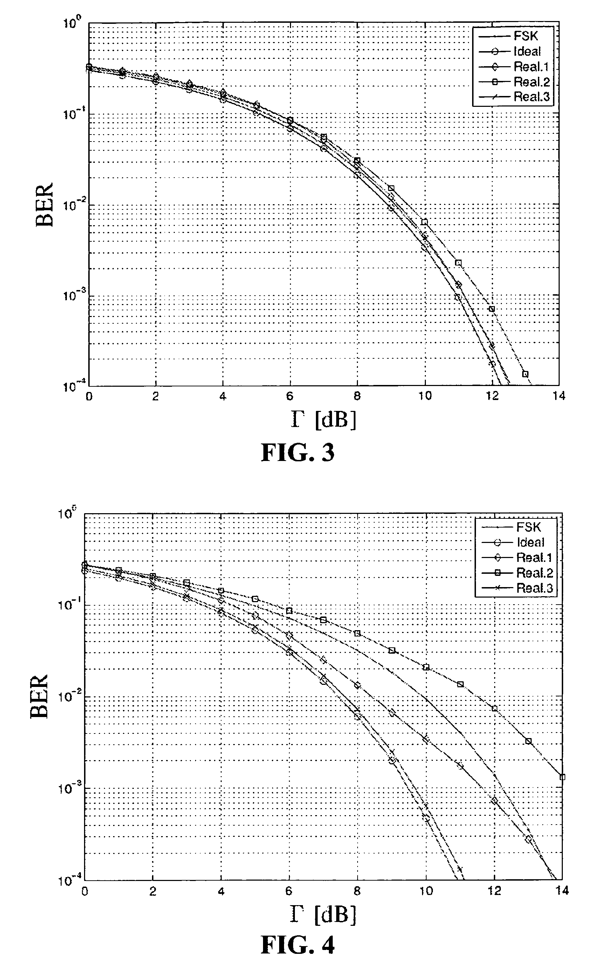

A packet-based transmission has been considered wherein each packet consists of a training sequence, with $L_{TS}$ = 32 and a payload of 1000 random bits. In all the following simulations the *Real.1* receiver is implemented with the parameters detailed above. The oversampling factor is fixed to I - 64 , and the results of the following curves are averaged over 1000 packets. FIG. 3 to FIG. 5 show the bit error rate (BER) versus the average signal-to-noise ratio $\Gamma$, for three different unbalancing factors: x = {0,-5,+10} dB.

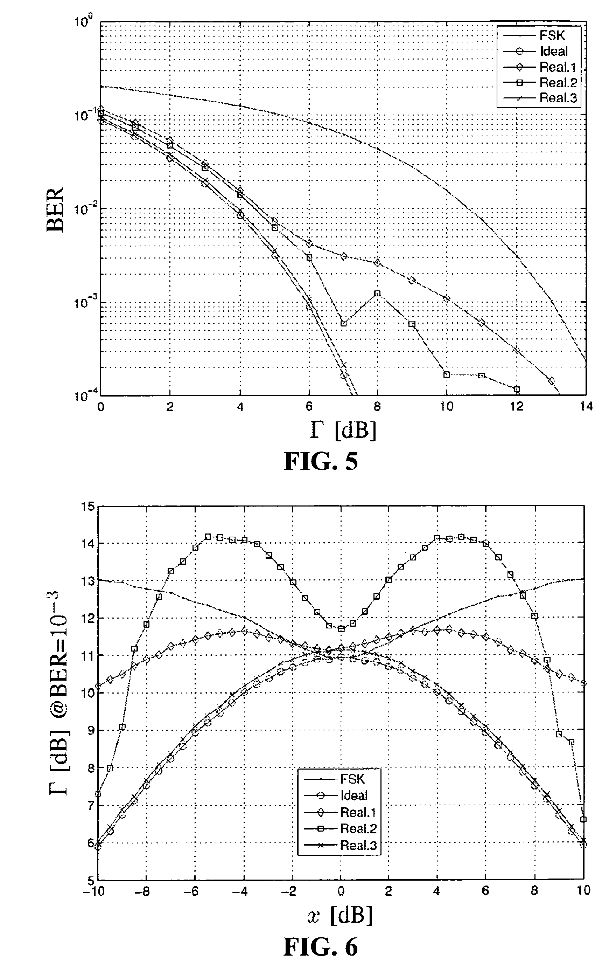

The swing of the *Real.2* curve, in the case of x = +10 dB with $5 \le \Gamma \le 10$ (FIG. 5), is due to the presence of a real channel estimator. In fact, when the channels are unbalanced, the estimator on the worst channel provides unreliable parameters. Hence, the estimated unbalancing factor may be wrong. As a consequence of that, the decision values are computed with the wrong equation and therefore the detected bits become wrong.

From the previous figures, it is clear that the herein proposed receiver outperforms the previous solutions; however, the gain of our solution depends on the value of the unbalancing factor x . In order to quantify this gain, the average signal-to-noise ratio $\Gamma$ required to achieve a *BER= $10^{-3}$* versus the unbalancing factor x is shown in FIG. 6.

The FSK receiver loses in performance with the increasing of the unbalancing factor; however, in the case of balanced channels, it represents the ideal solution. Indeed, the *Ideal* receiver has the same performance of the FSK receiver for x = 0 dB.

The *Real.2* receiver is the worst solution in the range of $|x| \le$ 7 dB; in fact, compared to the other receivers, it loses at least 1/2 dB when |x|<1 dB, and approximately 4 dB when x = 5 dB. However, with an absolute value of the unbalancing factor higher than 6 dB, this solution tends to move closer to the performance of the *Ideal* receiver.

The *Real.1* and *Real.3* receivers perform similarly when the channels are almost balanced, i.e. |x|<2 dB. However, with the increasing of the unbalancing factor, the improvement of the *Real.3* receiver on the *Real.1* receiver becomes relevant: more than 3 dB, at x = -8 dB. Due to the presence of a real estimator, the *Real.3* receiver has a loss in performance compared to the *Ideal* receiver, which may be considered negligible.

## REFERENCES

[1] T. Schaub, "Spread frequency shift keying," IEEE Trans. Commun., vol. 42, no. 2, pp. 1056-1064, Feb 1994.

[2] N. Benvenuto and G. Cherubini, "Algorithms for communications system and their applications, " New York: Wiley, 2003.

[3] K. S. Shanmugan, "Digital and Analog Communication Systems, " New York: Wiley, 1979.

**Claims**

1. A method of estimating log-likelihood ratios for a first stream ($r_{0,k}$) and a second stream ($r_{1,k}$) of samples of a received S-FSK signal ($s(t)$) demodulated using a first carrier ($f_0$) and a second carrier ($f_1$), respectively, concomitant samples of the first stream and of the second stream representing a same received binary value, comprising the steps of:

   estimating channel and noise parameters, associated to the transmitted value -1 and the transmitted value +1, for the first stream and for the second stream of samples obtained from the received S-FSK modulated signal, estimating current signal-to-noise ratios for the current samples of the first stream and of the second stream of samples obtained from the received S-FSK modulated signal using said channel and noise parameters, estimating the log-likelihood ratios for the current samples of the first stream and of the second stream,

   **characterized in that** the method comprises:

   comparing the estimated current signal-to-noise ratios with the values of a discrete ordered set and identifying the respective pairs of consecutive values of the ordered set between which the current signal-to-noise ratios are comprised;
   carrying out the estimation of the log-likelihood ratios for the current samples of the first stream and of the second stream using respective polynomial interpolating approximating functions defined on said current signal-to-noise ratios and on the coefficients stored in a look-up table in correspondence of said pairs of consecutive values, said coefficients being related to the values of the natural logarithm of the modified Bessel function of the first kind of order zero in correspondence of respective values belonging to the discrete ordered set of values.

2. The method of claim 1, wherein said approximating functions are linear.

3. The method of claim 2 wherein said discrete ordered set of values comprises 0 and powers of 2 raised to an integer exponent.

4. A method of discriminating binary values in a received S-FSK modulated signal ($s(t)$), comprising the steps of:

   generating a first stream ($r_{0,k}$) and a second stream ($r_{1,k}$) of samples of the received S-FSK signal ($s(t)$) demodulated using a first carrier ($f_0$) and a second carrier ($f_1$);
   estimating log-likelihood ratios for both streams of samples with the method of claim 1;

   calculating for the first stream and for the second stream of samples respective reference values $\left(T_0^*, T_1^*\right)$
   as combinations of said estimated channel and noise parameters;
   calculating for the current sample of the first and second stream the respective decision values ($\mu_{-1}$) and ($\mu_{+1}$), using said log-likelihood ratios and the reference values;
   recognizing that a value +1 has been received when the decision value for the current sample of the second stream is greater than the decision value for the current sample of the first stream, otherwise recognizing that a value -1 has been received.

5. The method of claim 4, wherein said decision values are calculated as follows:

   - if said current signal-to-noise ratios are both smaller than or equal to a threshold, generating the decision value for the first stream equal to the negative value of the respective log-likelihood ratio and generating the decision value for the second stream equal to the respective log-likelihood ratio;
   - if said current signal-to-noise ratios are substantially equal to each other and both larger than said threshold, generating the decision values for each stream as the difference between the respective current sample and the respective reference value $\left(T_0^*, T_1^*\right)$;
   - in all other cases, generating the decision value for the smallest current signal-to-noise ratio equal to the reference value of the other stream and generating the decision value for the largest current signal-to-noise ratio equal to the respective current sample.

6. A receiver of S-FSK modulated signals, comprising
   a circuit adapted to generate a first stream ($r_{0,k}$) and a second stream ($r_{1,k}$) of samples of the received S-FSK signal

($s(t)$) demodulated using a first carrier ($f_0$) and a second carrier ($f_1$);
a discriminating circuit input with said streams of samples, adapted to implement the method of claim 4 to decide whether a value +1 or a value -1 has been received.

7.  A computer readable memory medium storing a software code adapted to cause a computer to implement steps of the method according to any of the preceding claims when said code is executed by the computer.

**Patentansprüche**

1.  Verfahren zum Schätzen von Log-Likelihood-Verhältnissen für einen ersten Strom ($r_{0,k}$) und einen zweiten Strom ($r_{1,k}$) von Abtastwerten eines empfangenen S-FSK-Signals ($s(t)$), das mittels eines ersten Trägers ($f_0$) bzw. eines zweiten Trägers ($f_1$) demoduliert wird, wobei gleichzeitig vorhandene Abtastwerte des ersten Stroms und des zweiten Stroms einen gleichen empfangenen Binärwert repräsentieren, das die Schritte aufweist:

    Schätzen von Kanal- und Störparametern, die mit dem übertragenen Wert -1 und dem übertragenen Wert +1 verbunden sind, für den ersten Strom und für den zweiten Strom von Abtastwerten, die aus dem empfangenen S-FSK-modulierten Signal erhalten werden,
    Schätzen gegenwärtiger Störabstände für die gegenwärtigen Abtastwerte des ersten Stroms und des zweiten Stroms von Abtastwerten, die aus dem empfangenen S-FSK-modulierten Signal erhalten werden, mittels der Kanal- und Störparameter,
    Schätzen der Log-Likelihood-Verhältnisse für die gegenwärtigen Abtastwerte des ersten Stroms und des zweiten Stroms,

    **dadurch gekennzeichnet, daß** das Verfahren aufweist:

    Vergleichen der geschätzten gegenwärtigen Störabstände mit den Werten eines diskreten geordneten Satzes und Identifizieren der jeweiligen Paare von aufeinanderfolgenden Werten des geordneten Satzes, zwischen denen die gegenwärtigen Störabstände enthalten sind;
    Ausführen der Schätzung der Log-Likelihood-Verhältnisse für die gegenwärtigen Abtastwerte des ersten Stroms und des zweiten Stroms mittels jeweiliger ganzrationaler interpolierender Nährungsfunktionen, die an den gegenwärtigen Störabständen und an den Koeffizienten definiert sind, die in einer Nachschlagtabelle in Entsprechung zu den Paaren aufeinanderfolgender Werte gespeichert sind, wobei die Koeffizienten mit den Werten des natürlichen Logarithmus der modifizierten Bessel-Funktion der ersten Art nullter Ordnung in Entsprechung zu jeweiligen Werten zusammenhängen, die zu den diskreten geordneten Satz von Werten gehören.

2.  Verfahren nach Anspruch 1, wobei die Nährungsfunktionen linear sind.

3.  Verfahren nach Anspruch 2, wobei der diskrete geordnete Satz von Werten 0 und Potenzen von 2 mit einem ganzzahligen Exponenten aufweist.

4.  Verfahren zum Diskriminieren von Binärwerten in einem empfangenen S-FSK-modulierten Signal ($S(t)$), das die Schritte aufweist:

    Erzeugen eines ersten Stroms ($r_{0,k}$) und eines zweiten Stroms ($r_{1,k}$) von Abtastwerten des empfangenen S-FSK-Signals ($s(t)$), das mittels eines ersten Trägers ($f_0$) und eines zweiten Trägers ($f_1$) demoduliert wird;
    Schätzen von Log-Likelihood-Verhältnissen für beide Ströme von Abtastwerten mit dem Verfahren nach Anspruch 1;
    Berechnen für den ersten Strom und für den zweiten Strom von Abtastwerten jeweiliger Bezugswerte ($T_0^*$, $T_1^*$) als Kombinationen der geschätzten Kanal- und Störparameter;
    Berechnen für den gegenwärtigen Abtastwert des ersten und zweiten Stroms der jeweiligen Entscheidungswerte ($\mu_{-1}$) und ($\mu_{+1}$) mittels der Log-Likelihood-Verhältnisse und der Bezugswerte;
    Erkennen, daß ein Wert +1 empfangen worden ist, wenn der Entscheidungswert für den gegenwärtigen Abtastwert des zweiten Stroms größer als der Entscheidungswert für den gegenwärtigen Abtastwert des ersten Stroms ist, andernfalls Erkennen, daß ein Wert -1 empfangen worden ist.

5.  Verfahren nach Anspruch 4, wobei die Entscheidungswerte wie folgt berechnet werden:

- wenn die gegenwärtigen Störabstände beide kleiner oder gleich einem Schwellenwert sind, Erzeugen des Entscheidungswerts für den ersten Strom, der gleich dem negativen Wert des jeweiligen Log-Likelihood-Verhältnisses ist, und Erzeugen des Entscheidungswerts für den zweiten Strom, der gleich dem jeweiligen Log-Likelihood-Verhältnis ist;
- wenn die gegenwärtigen Störabstände im wesentlichen zueinander gleich und beide größer als der Schwellenwert sind, Erzeugen der Entscheidungswerte für jeden Strom als Differenz zwischen dem jeweiligen gegenwärtigen Abtastwert und dem jeweiligen Bezugswert ($T_0^*$, $T_1^*$);
- in allen anderen Fällen, Erzeugen des Entscheidungswerts für den kleinsten gegenwärtigen Störabstand, der gleich dem Bezugswert des anderen Stroms ist, und Erzeugen des Entscheidungswerts für den größten gegenwärtigen Störabstand, der gleich dem jeweiligen gegenwärtigen Abtastwert ist.

6.  Empfänger für S-FSK-modulierte Signale, mit
    einer Schaltung, die eingerichtet ist, einen ersten Strom ($r_{0,k}$) und einen zweiten Strom ($r_{1,k}$) von Abtastwerten des empfangenen S-FSK-Signals (s(t)) zu erzeugen, das mittels eines ersten Trägers ($f_0$) und eines zweiten Trägers ($f_1$) demoduliert wird;
    einer Diskriminierungsschaltung, in die die Ströme von Abtastwerten eingegeben werden, die eingerichtet ist, das Verfahren nach Anspruch 4 auszuführen, um zu entscheiden, ob ein Wert +1 oder ein Wert -1 empfangen worden ist.

7.  Computerlesbares Speichermedium, das einen Softwarecode speichert, der eingerichtet ist, einen Computer zu veranlassen, Schritte des Verfahrens nach einem der vorhergehenden Ansprüche auszuführen, wenn der Code durch den Computer ausgeführt wird.

## Revendications

1.  Procédé d'estimation de rapports de vraisemblance logarithmiques pour un premier flux ($r_{0,k}$) et un second flux ($r_{1,k}$) d'échantillons d'un signal S-FSK reçu (s(t)) démodulés en utilisant une première porteuse ($f_0$) et une seconde porteuse ($f_1$), respectivement, des échantillons concomitants du premier flux et du second flux représentant une même valeur binaire reçu, comprenant les étapes suivantes :

    estimer des paramètres de canal et de bruit associés à la valeur transmise -1 et à la valeur transmise +1 pour le premier flux et pour le second flux d'échantillons obtenus à partir du signal modulé S-FSK reçu,
    estimer des rapports signal-sur-bruit courants pour des échantillons courants du premier flux et du second flux d'échantillons obtenus à partir du signal modulé S-FSK reçu en utilisant les paramètres de canal et de bruit,
    estimer les rapports de vraisemblance logarithmiques pour les échantillons courants du premier flux et du second flux,

    **caractérisé en ce que** le procédé comprend :

    comparer les rapports signal-sur-bruit courants estimés aux valeurs d'un ensemble discret ordonné et identifier les paires respectives de valeurs consécutives de l'ensemble ordonné entre lesquels les rapports signal-sur-bruit courants sont compris ;
    effectuer l'estimation des rapports de vraisemblance logarithmiques pour les échantillons courants du premier flux et du second flux en utilisant des fonctions d'approximation d'interpolation polynomiale définies sur les rapports signal-sur-bruit courants et sur les coefficients mémorisés dans une table de consultation en correspondance avec les paires de valeurs consécutives, les coefficients étant associés aux valeurs du logarithme naturel de la fonction Bessel modifiée du premier type d'ordre zéro en correspondance avec des valeurs respectives appartenant à l'ensemble discret ordonné de valeurs.

2.  Procédé selon la revendication 1, dans lequel les fonctions d'approximation sont linéaires.

3.  Procédé selon la revendication 2, dans lequel l'ensemble ordonné discret de valeurs comprend 0 et des puissances entières de 2.

4.  Procédé de discrimination de valeurs binaires dans un signal modulé S-FSK reçu (s(t)) comprenant les étapes suivantes :

    produire un premier flux ($r_{0,k}$) et un second flux ($r_{1,k}$) d'échantillons du signal S-FSK reçu (s(t)) démodulés en utilisant une première porteuse ($f_0$) et une seconde porteuse ($f_1$) ;

estimer des rapports de vraisemblance logarithmiques pour deux flux d'échantillons par le procédé de la revendication 1 ;

calculer pour le premier flux et pour le second flux * * d'échantillons des valeurs de référence respectives $(T_0^*, T_1^*)$ sous forme de combinaisons des paramètres estimés de canal et de bruit ;

calculer pour l'échantillon courant du premier et du second flux des valeurs de décision respectives ($\mu_{-1}$) et ($\mu_{+1}$), en utilisant les rapports de vraisemblance logarithmiques et les valeurs de référence ;

reconnaître qu'une valeur +1 a été reçue quand la valeur de décision pour l'échantillon courant du second flux est supérieure à la valeur de décision pour l'échantillon courant du premier flux, sinon reconnaître qu'une valeur -1 a été reçue.

5. Procédé selon la revendication 4, dans lequel les valeurs de décision sont calculées de la façon suivants :

- si les rapports signal-sur-bruit courant sont tous deux inférieur ou égal à un seuil, produire la valeur de décision pour le premier flux égale à la valeur négative du rapport de vraisemblance logarithmique respectif et produire la valeur de décision du second flux selon le rapport de vraisemblance logarithmique respectif ;
- si les rapports signal-sur-bruit courants sont sensiblement égaux l'un à l'autre et tous deux supérieurs au seuil, produire les valeurs de décision pour chaque flux en tant que différence entre l'échantillon courant respectif et la valeur de référence respective $(T_0^*, T_1^*)$ ;
- dans tous les autres cas, produire la valeur de décision pour le plus petit rapport signal-sur-bruit courant égale à la valeur de référence de l'autre flux et produire la valeur de décision pour le plus grand rapport signal sur bruit courant égale à l'échantillon courant respectif.

6. Récepteur de signaux modulés S-FSK comprenant :

un circuit adapté à produire un premier flux ($r_{0,k}$) et un second flux ($r_{1,k}$) d'échantillons du signal S-FSK reçu ($s(t)$) démodulés en utilisant une première porteuse ($f_0$) et une seconde porteuse ($f_1$) ;
un circuit de discrimination recevant des flux d'échantillons, adapté à mettre en oeuvre le procédé de la revendication 4 pour décider si une valeur +1 ou une valeur -1 a été reçue.

7. Milieu mémoire lisible par ordinateur mémorisant un code logiciel adapté à amener un ordinateur à mettre en oeuvre les étapes du procédé selon l'une quelconque des revendications précédentes quand ledit code est exécuté par l'ordinateur.

**FIG. 1**

**FIG. 2**

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANIL MENGI ; A.J. VINCK.** Maximum-likelihood block decoding of noncoherent coded FSK for the CENELEC band. *Power Line Communications and its Applications, 2008, ISPLC 2008, IEEE International-al Symposium on, IEEE, Piscataway, NJ, USA,* 02 April 2008, 117-122
- **T. SCHAUB.** Spread frequency shift keying. *IEEE Trans. Commun.,* February 1994, vol. 42 (2), 1056-1064
- Algorithms for communications system and their applications. **N. BENVENUTO ; G. CHERUBINI.** Algorithms for communications system and their applications. Wiley, 2003
- **K. S. SHANMUGAN.** Digital and Analog Communication Systems. Wiley, 1979